# EUROPEAN PATENT APPLICATION

(11) **EP 4 548 743 A1**
(43) Date of publication of application: **07.05.2025**
(21) Application number: 23207825.3
(22) Date of filing: 06.11.2023
(51) Int. Cl.: A01D 41/127

(54) **FIELD PREDICTION FOR AGRICULTURAL HARVESTERS**

(71) Applicant: CNH Industrial Belgium N.V., 8210 Zedelgem (BE); CNH Industrial America LLC, New Holland, PA 17557 (US)
(72) Inventor: HUNT, Cory, New Holland, 17557 (US); MAELEGHEER, Pieter, 8210 Zedelgem (BE); MISSOTTEN, Bart, 8210 Zedelgem (BE); JONGMANS, Dré, 8210 Zedelgem (BE); MAHIEU, Thomas, 8210 Zedelgem (BE)
(74) Representative: CNH Industrial IP Department

(57) **Abstract**

A method of controlling an agricultural harvester (10) comprises a step (210) of receiving past sensor signals from a field sensor of a first agricultural vehicle, the past sensor signals representing a field or crop property at specified locations in an agricultural field. The method further comprises a step (220) of, while harvesting, receiving real-time sensor signals from a field sensor (82, 84) of the agricultural harvester (10), the real-time sensor signals representing the field or crop property at a current location in the agricultural field. Based on the past sensor signals and the real-time sensor signals, a field prediction is determined representing the field or crop property at a future location in the agricultural field. Based on the field prediction, an operational parameter of the agricultural harvester (10) is controlled

## Description

### TECHNICAL FIELD

The present invention relates to a method of controlling an agricultural harvester based on sensor signals representing a field or crop property at specified locations in an agricultural field. The present invention further relates to a controller and software for performing such a method and to an agricultural harvester equipped with hardware configured to do so.

### BACKGROUND

Modern agricultural harvesters are complex machines with many structural and functional parts, arranged to perform a plurality of different functions related to the harvesting of specific crops or types of crops. A combine harvester, for example, is equipped with a plurality of functional units for the harvesting and processing of grain and grain-like crops. The main functions of a combine harvester include the cutting and taking in of the crop, threshing the grains from the stalks in a threshing section, separating the chaff from the grain kernels in a cleaning section, and releasing the straw and chaff residue from the harvester.

To optimise various output parameters, such as, crop yield, harvesting time, fuel efficiency, etc., many operational parameters of the agricultural harvester are adjustable while harvesting. The adjustment of the many structural and functional parts of the agricultural harvester may be done by an operator, based on real-time sensor data and/or his own observations, or automatically based on real-time sensor data and appropriately designed control algorithms. In a combine harvester, for example, a driving speed may be adapted to control a feed rate, and a header height may be adjusted to control an amount of straw material that is taken in together with the harvested grain.

In the European patent application published as EP 3 011 824 A1, a number of header mounted sensors is used for monitoring the crop and the ground profile in front of a combine harvester. A digital controller is coupled to the header mounted sensors and processes the incoming sensor signals to determine a ground profile, a crop height, a stem height, and a grain height, in an area immediately in front of the header of the harvester. Based on the thus determined field and crop properties, various operational parameters of the combine harvester can be adjusted in advance of, for example, an upcoming change in ground profile or crop height. However, since the sensors are mounted to the header and directed generally perpendicularly to the ground they can only look a few meters ahead of the front end of the header of the combine harvester. Sudden and large changes in field or crop properties may be detected too late for the combine harvester to adjust its operation accordingly. To avoid the inadvertent crop losses or damage to the combine harvester that may occur due to this late detection, .

It is an aim of the present invention to address one or more disadvantages associated with the prior art.

### SUMMARY OF THE INVENTION

According to an aspect of the invention there is provided a method of controlling an agricultural harvester. The method comprises a step of receiving past sensor signals from a field sensor of a first agricultural vehicle, the past sensor signals representing a field or crop property at specified locations in an agricultural field. The method further comprises a step of, while harvesting, receiving real-time sensor signals from a field sensor of the agricultural harvester, the real-time sensor signals representing the field or crop property at a current location in the agricultural field. Based on the past sensor signals and the real-time sensor signals, a field prediction is determined representing the field or crop property at a future location in the agricultural field. Based on the field prediction, an operational parameter of the agricultural harvester is controlled.

The method according to the invention combines the advantages of using previously obtained field or crop property data relating to locations that are not yet in the field of view of the field sensor of the agricultural harvester, as well as real-time, likely more accurate, data from the field sensor of the agricultural harvester. The past sensor signals allow the controller of the agricultural harvester to plan ahead and to adapt or start adapting one or more operational parameters in advance to being able to accurately observe the specified location with its own field sensors. When receiving the real-time sensor signals and comparing those to the earlier obtained past sensor signals, the controller can establish a correlation between the past sensor signals relating to a specified location and the corresponding real-time field or crop properties at that location. This correlation may then be used to increase an accuracy of the field prediction based on the past sensor signals.

The invention thus allows the agricultural harvester to adjust relevant operational parameters of the agricultural harvester before the field sensor of the agricultural harvester is in a position to detect the respective field or crop property at the respective location. The real-time sensor signals from the field sensor of the agricultural harvester may then be used for last-minute refinement of the operational parameter and/or for improving the field or crop property predictions derived from the past sensor signals.

In embodiments of the method of the invention, the field sensor of the first agricultural vehicle and the field sensor of the agricultural harvester are both radar sensors. When the past sensor signals and the real-time sensor signals are obtained with similar sensors, the correlation between them will be stronger and the field prediction may be more accurate. In preferred embodiments, both field sensors are radar sensors operating in the same frequency range, using equal emission power, and/or outputting data in identical file formats. Alternatively, other sensors than radar sensors are used. For example, both field sensors may be ultrasound sensors, lidar sensors, thermal cameras, or visual cameras.

In embodiments of the method of the invention, the field sensor of the first agricultural vehicle and the field sensor of the agricultural harvester are both radar sensors, and the first agricultural vehicle and/or agricultural harvester has/have an additional sensor which signal is used for interpretation of the radar signal. For example, a radar sensor detects a higher plant height and by using a camera as additional sensor, the colour of the higher plant can be determined, so that the higher plant can be distinguished as crop, for example brown wheat, or weed, for example green ryegrass.

In special embodiments, the method of controlling the agricultural harvester comprises a step of using the field sensor of the first agricultural vehicle to obtain the real-time sensor signals. For example, the field sensor may be a separate unit that is detachably mounted to a field sensor connection mount. The first agricultural vehicle and the agricultural harvester may each comprise one or more identical connection mounts and the field sensor may then be easily taken from the first agricultural vehicle and plugged into the connection mount of the agricultural harvester, or vice versa. Apart from leading to cost savings caused by needing fewer field sensors, this brings the advantage that the past sensor signals are obtained with exactly the same filed sensor as the real-time sensor signals, thereby maximising the strength of the correlation between them and improving the accuracy of the field prediction.

The field or crop property represented by the sensor signals may, e.g., comprise a ground profile, a crop height, a grain height, a weed density or a crop density. Some field properties, like the ground profile may remain constant between the moments of obtaining the past sensor signals (by field sensors of the first agricultural vehicle) and the real-time sensor signals (by field sensors of the agricultural harvester). Other field properties, like crop density may be more variable. However, past soil densities will typically correlate strongly current and future soil densities. The real-time sensor signals can thus be used to establish this correlation and the established correlation can then be used to predict the crop density for field locations that are going to be harvested by the agricultural harvester in the immediate future. Similarly, some crop properties for future location may be easier to predict accurately than other crop properties based on past sensor signals and real-time sensor signals for a current location. Furthermore, prediction accuracy may be further improved by combining past and real-time sensor signals representing two or more different crop and/or field properties. For example, higher weed levels may reduce the crop's ability to grow. So, past current crop height at a future location may be determined by comparing past and current crop height data for other locations while further taking into account past and/or current weed levels for those other locations.

The controlled operational parameter may, e.g., comprise a driving speed, a header setting, a threshing setting, or a cleaning setting of the agricultural harvester.

The first agricultural vehicle may, e.g., be a sprayer, a planter, a tillage or weeder implement, a mower, a hay tool like a rake or tedder, a fertilizer or manure spreader, all either pulled by a tractor or self-propelled. The first agricultural vehicle can also be an autonomous vehicle, like for example an autonomous tractor pulling an implement or an autonomous robotic weeder. The first agricultural vehicle may also be one of the above mentioned agricultural vehicles just collecting data with its field sensor but not, or not always, performing its function, for example a sprayer collecting data as it drives over the field but not, or not always, actively spraying. The first agricultural vehicle may also be a scouting vehicle equipped with a field sensor. The agricultural harvester may, e.g., be a combine harvester, a forage harvester, a forage wagon, a round or square baler, a grape harvester, a sugar cane harvester or a cotton harvester.

According to a further aspect of the invention, a non-transitory, computer-readable storage medium is provided, storing instructions thereon that when executed by one or more processors cause the one or more processors to execute a method as described above.

According to yet another aspect of the invention, an agricultural harvester is provided comprising a field sensor for generating real-time sensor signals representing a field or crop property at a current location in an agricultural field and a controller. The controller is operatively coupled to the field sensor and configured to receive past sensor signals from a field sensor of a first agricultural vehicle, the past sensor signals representing the field or crop property at specified locations in the agricultural field, to receive, while harvesting, the real-time sensor signals generated by the field sensor of the agricultural harvester, to determine, based on the past sensor signals and the real-time sensor signals, a field prediction representing the field or crop property at a future location in the agricultural field, and to control, based on the field prediction, an operational parameter of the agricultural harvester.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used; and
Figure 2 shows a flow chart of a method for controlling an agricultural harvester.

### DETAILED DESCRIPTION

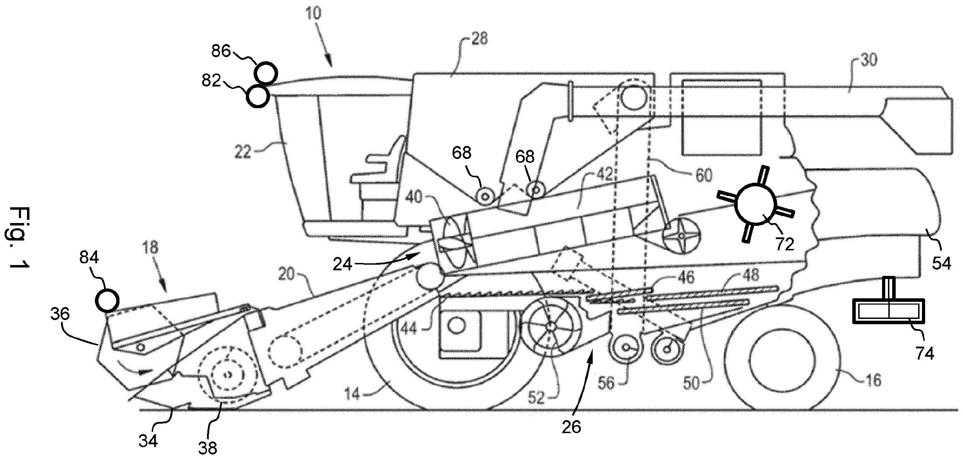

Figure 1 schematically shows an agricultural harvester in the form of a combine harvester 10. The combine harvester 10 generally includes front and rear round engaging wheels 14, 16, a header 18, a feeder 20, an operator cabin 22, a threshing and separation system 24, a cleaning system 26, a grain tank 28 and an unloading tube 30. Other types of agricultural harvesters that may benefit of the method according to the invention are a forage harvester, a forage wagon, a round or square baler, a grape harvester, a sugar cane harvester or a cotton harvester.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

The combine harvester 10 further comprises at least one field sensor 82, 84 for obtaining sensor signals representing a field or crop property while driving through the field. The field sensors 82, 84 may, e.g., be mounted to the top of the operator cabin 22, on the header 18, or on other parts of the combine harvester 10 from which the field sensors 82, 84 have a good view on the field ahead of the combine harvester 10 and the crop to be harvested. The field sensors 82, 84 may include, but are not limited to, radar sensors, ultrasound sensors, visual cameras, or thermal cameras.

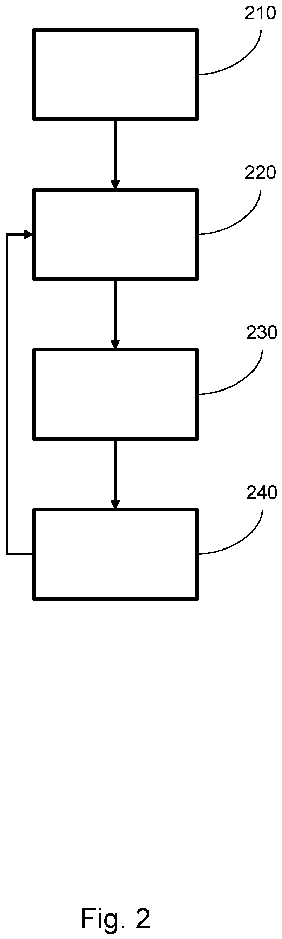

Figure 2 shows a flow chart of a method for controlling a combine harvester 10 or other type of agricultural harvester. The method is performed by a controller of the combine harvester 10. Typically, the controller will be situated in or on the combine harvester 10. In special embodiments, the method may be primarily executed on a remote controller that is in direct communication with a controller on the combine harvester 10 for exchanging sensor signals and control instructions therewith.

The method comprises a first step 210 of receiving past sensor signals from a field sensor of a first agricultural vehicle. The first agricultural vehicle may, e.g. be a sprayer, a planter, a tillage or weeder implement, a mower, a hay tool a rake or tedder, a fertilizer or manure spreader, all either pulled by a tractor or self-propelled. The past sensor signals obtained by the first agricultural vehicle represent a field or crop property at specified locations in an agricultural field. The field or crop property represented by the sensor signals may, e.g., comprise a ground profile, a crop height, a grain height, a weed density or a crop density. A GPS receiver or similar geolocation device may be used for georeferencing the past sensor signals. Preferably, the past sensor signals are obtained just hours or days before the crop is harvested to ensure that the measured field and crop properties strongly correlate with the field and crop properties at the time of harvesting. However, also with less recent past sensor signals a strong correlation may still be present, especially so for the field properties.

The combine harvester controller may receive the past sensor signals wirelessly, e.g., via an Internet connection or through direct communication with the field sensor or data controller of the first agricultural vehicle. Alternatively, a USB memory stick or other type of hardware memory device is used to transfer the past sensor signals from the first agricultural vehicle to the combine harvester 10. The past sensor signals may be transferred to the combine harvester 10 without being processed or some pre-processing may have already occurred at the first agricultural vehicle. For example, a controller of the first agricultural vehicle may calculate the field and crop properties and send the georeferenced field and crop property data to the combine harvester 10.

It is also possible that the past sensor signals, either as raw data or as more or less processed data, are uploaded from the first agricultural vehicle to a cloud / remote servers, further processed in the cloud / remote servers and then send to the combine harvester controller, before the combine harvester harvests the crop on the location relating to the past sensor signals. The past sensor signals can be sent to the combine harvester almost immediately after the first agricultural vehicle has captured the past sensor signal or just before the combine harvester will harvest the crop on the location relating to the past sensor signals, and any time in between.

In a second step 220, which is performed while the combine harvester 10 drives through the field for harvesting the crop, real-time sensor signals are received from one or more field sensors 82, 84 of the combine harvester 10. Like the past sensor signals, the real-time sensor signals represent the field or crop property at a specific location in the agricultural field. A GPS receiver or similar geolocation device may be used for georeferencing the location of the combine harvester 10.

In embodiments of the method of the invention, the field sensor of the first agricultural vehicle and the field sensor 82, 84 of the combine harvester 10 are both radar sensors. When the past sensor signals and the real-time sensor signals are obtained with similar sensors, the correlation between them will be stronger and the field prediction may be more accurate. In preferred embodiments, the field sensors of the first agricultural vehicle and the combine harvester 10 are both radar sensors, operating in the same frequency range, using equal emission power, and/or outputting data in identical file formats. Alternatively, other sensors than radar sensors are used. For example, both field sensors may be ultrasound sensors, lidar sensors, thermal cameras, or visual cameras.

In embodiments of the invention, the field prediction representing the field or crop property at a future location in the agricultural field is based on the past and real-time radar signals, and on an additional sensor signal from an additional sensor (86) of the first agricultural vehicle and/or the agricultural harvester (10), for example a camera.

In special embodiments, the field sensor or field sensors of the first agricultural vehicle may be taken from the first agricultural and installed on the combine harvester 10 after having obtained the past sensor signals and before starting the harvesting. For example, the field sensor may be a separate unit that is detachably mounted to a field sensor connection mount. The first agricultural vehicle and the combine harvester 10 may each comprise one or more identical connection mounts and the field sensor to allow for an easy exchange of the field sensors between the two vehicles. Apart from leading to cost savings caused by needing fewer field sensors, this brings the advantage that the past sensor signals are obtained with exactly the same filed sensor as the real-time sensor signals, thereby maximising the strength of the correlation between them and improving the accuracy of the subsequent field prediction.

This subsequent field prediction is made in a subsequent third step 230. In this third step 230, the field prediction is determined based on the past sensor signals and the real-time sensor signals. The field prediction represents predicted field or crop properties at a future location in the agricultural field, i.e. at a location where the combine harvester 10 is planned or expected to arrive soon. For determining this field prediction, the controller combines the previously obtained field or crop property data relating to locations that are not yet in the field of view of the field sensor of the combine harvester 10, with real-time data from the field sensors of the combine harvester 10 itself.

Some field properties, like the ground profile may remain constant between the moments of obtaining the past sensor signals (by field sensors of the first agricultural vehicle) and the real-time sensor signals (by field sensors of the agricultural harvester). Other field properties, like crop density may be more variable. However, past soil densities will typically correlate strongly current and future soil densities. The real-time sensor signals can thus be used to establish this correlation and the established correlation can then be used to predict the crop density for field locations that are going to be harvested by the combine harvester 10 in the immediate future. Similarly, some crop properties for future location may be easier to predict accurately than other crop properties based on past sensor signals and real-time sensor signals for a current location. Furthermore, prediction accuracy may be further improved by combining past and real-time sensor signals representing two or more different crop and/or field properties. For example, higher weed levels may reduce the crop's ability to grow. So, past current crop height at a future location may be determined by comparing past and current crop height data for other locations while further taking into account past and/or current weed levels for those other locations.

In the fourth step 240 of the method shown in Figure 2 an operational parameter of the agricultural harvester 10 is controlled based on the field prediction mad in the third step 230. The controlled operational parameter may, e.g., comprise a driving speed, a header setting, a threshing setting, or a cleaning setting of the combine harvester 10. The use of past sensor signals allows the controller of the combine harvester 10 to plan ahead and to adapt or start adapting one or more operational parameters in advance to being able to accurately observe the specified location with its own field sensors 82, 84. The real-time sensor signals from the field sensors 82, 84 of the combine harvester 10 are thus used for last-minute refinement of the operational parameter and/or for improving the field or crop property predictions derived from the past sensor signals.

While harvesting, the controller continuously and repeatedly runs through the second, third, and fourth steps 220, 230, 240 of the method shown in Figure 2. New sensor data is continuously obtained and processed, combined with previously received sensor data from the other agricultural vehicle, and then used to make new field predictions and improve already existing field predictions. The accurate field predictions obtained in this way are continuously used for the timely and optimal adjustment of relevant control parameters of the combine harvester 10.

## Claims

1. A method of controlling an agricultural harvester (10), the method comprising:
receiving past sensor signals from a field sensor of a first agricultural vehicle, the past sensor signals representing a field or crop property at specified locations in an agricultural field,
while harvesting, receiving real-time sensor signals from a field sensor (82, 84) of the agricultural harvester (10), the real-time sensor signals representing the field or crop property at a current location in the agricultural field,
based on the past sensor signals and the real-time sensor signals, determining a field prediction representing the field or crop property at a future location in the agricultural field, and
based on the field prediction, controlling an operational parameter of the agricultural harvester (10).

2. A method of controlling an agricultural harvester (10) as claimed in claim 1, wherein the field sensor of the first agricultural vehicle and the field sensor (82, 84) of the agricultural harvester (10) are radar sensors.

3. A method of controlling an agricultural harvester (10) as claimed in claim 2, wherein the field prediction representing the field or crop property at a future location in the agricultural field is based on the past and real-time radar signals, and on an additional sensor signal from an additional sensor (86) of the first agricultural vehicle and/or the agricultural harvester (10).

4. A method of controlling an agricultural harvester (10) as claimed in claim 3, wherein the additional sensor (86) is a camera.

5. A method of controlling an agricultural harvester (10) as claimed in any preceding claim, further comprising a step of using the field sensor of the first agricultural vehicle to obtain the real-time sensor signals.

6. A method of controlling an agricultural harvester (10) as claimed in any preceding claim, wherein the field or crop property comprises a ground profile, a crop height, a grain height, a weed density or a crop density.

7. A method of controlling an agricultural harvester (10) as claimed in any preceding claim, wherein the operational parameter comprises a driving speed, a header setting, a threshing setting, or a cleaning setting of the agricultural harvester (10).

8. A method of controlling an agricultural harvester (10) as claimed in any preceding claim, wherein the first agricultural vehicle is a sprayer or a weeder.

9. A method of controlling an agricultural harvester (10) as claimed in any preceding claim, wherein the first agricultural vehicle is an autonomous agricultural vehicle.

10. A method of controlling an agricultural harvester (10) as claimed in any preceding claim, wherein the agricultural harvester (10) is a combine harvester (10).

11. A non-transitory, computer-readable storage medium storing instructions thereon that when executed by one or more processors cause the one or more processors to execute the method of any of claims 1 to 10.

12. An agricultural harvester (10) comprising a field sensor (82, 84) for generating real-time sensor signals representing a field or crop property at a current location in an agricultural field and a controller, operatively coupled to the field sensor (82, 84) and configured to:
receive past sensor signals from a field sensor of a first agricultural vehicle, the past sensor signals representing the field or crop property at specified locations in the agricultural field,
while harvesting, receive the real-time sensor signals generated by the field sensor (82, 84) of the agricultural harvester (10),
based on the past sensor signals and the real-time sensor signals, determine a field prediction representing the field or crop property at a future location in the agricultural field, and
based on the field prediction, control an operational parameter of the agricultural harvester (10).

13. An agricultural harvester (10) as claimed in claim 12, wherein the field sensor (82, 84) of the agricultural harvester (10) is a radar sensor.

14. An agricultural harvester (10) as claimed in claim 12 or 13, wherein the field or crop property comprises a ground profile, a crop height, a grain height, a weed density or a crop density.

15. An agricultural harvester (10) as claimed in any of claims 12 to 14, wherein the operational parameter comprises, a driving speed, a header setting, a threshing setting, or a cleaning setting of the agricultural harvester (10).

16. An agricultural harvester (10) as claimed in any of claims 12 to 15, wherein the agricultural harvester (10) is a combine harvester (10).
